# EUROPEAN PATENT APPLICATION

(11) **EP 3 469 942 A1**
(43) Date of publication of application: **17.04.2019**
(21) Application number: 17425099.3
(22) Date of filing: 16.10.2017
(51) Int. Cl.: A43B 7/32, A43B 23/08, B29D 35/00, B29D 35/06

(54) **SAFETY FOOTWEAR AND METHOD OF MANUFACTURING**

(71) Applicant: Garsport S.r.l., 31040 Volpago del Montello, Treviso (IT)
(72) Inventor: Garbuio, Cristian, I-31040 Volpago del Montello, Treviso (IT)
(74) Representative: Pulieri, Gianluca Antonio

(57) **Abstract**

The present invention relates to a method of manufacturing a safety footwear as well as to a safety footwear comprising an upper (3) and a lining (4) intimately associated with each other, a safety toe (5), fitted on a portion of said upper (3), a retaining portion (8) that fully coats said toe (5) associating it with said upper (3), wherein said method comprises the step of injecting into a mould (7) thermosetting material in liquid or semiliquid state until fully embedding at least said safety toe (5).

## Description

### Field of the invention

. The present invention relates to a method for manufacturing footwear, as well as to footwear obtained by said method.

. The present invention concerns in particular the technical domain of safety footwear.

. The present invention further relates to a safety footwear.

. In particular, the present invention concerns safety footwear comprising a safety toe.

### Prior art

. Safety shoes or boots are generally intended to protect a worker's feet from accidental impacts against machinery or furniture as well as from the impact caused by heavy bodies falling on the worker's feet. The replacement frequency of safety shoes is imposed by their wear and it is typically regulated by dedicated regulations which generally prescribe a maximum operating lifespan of no more than six months, in certain cases four months. It is equally desirable for safety shoes to be sufficiently comfortable, since they have to be worn for many continuous hours, nearly every working day.

. Typically, known safety shoes comprise a reinforcement portion protecting the toe of the shoe, which is usually made of steel, hard plastic or another material able to absorb the energy of the collision or of the impact, without breaking and causing harm to the wearer.

. In some cases, in particular for applications in the construction sector, known safety shoes comprise a reinforcing insole, usually woven to provide the desirable flexibility, which is interposed between the upper layer of the sole and the user's foot, to protect the feet of the worker who wears them from any penetration of sharp bodies, such as nails.

. Known safety shoes are manufactured by making first the lining, which is then manually fitted by an operator on a plastic core that is shaped as a foot, when it is favourably placed upside down to facilitate the operation of fitting the lining on the core.

. Subsequently, the lining is removed from the core and a rigid reinforcing toe is applied, for instance glued, on the front portion of the lining to protect the toes of the foot of the worker who will wear the shoes.

. Thereupon, said rigid reinforcing toe is fixed in the desired final position by making a fabric upper which is applied to coat the entire lining. The fabric upper is typically applied with the aid of a dedicated machinery, known as tack-lasting machine, which with the pliers with which it is equipped stretches the fabric of the upper and wraps around the lining and the toe, folding back edges of upper so as to secure them, for example by gluing them or sewing them with Strobel stitching to the lower portion of the insole, i.e. the portion facing or intended to be in contact with the superior face of the sole. This step is known in the industry as pre-assembly and it produces a pre-assembled intermediate product.

. After the pre-assembly step described above, the pre-assembled intermediate product comprising the upper, the toe and the sole is fitted on a second core, preferably made of aluminium or other metallic material, for forming the sole that is usually produced by moulding, housing in the mould the pre-assembled intermediate product before the injection of liquid polymer that permeates in the gap between the inner walls of the mould and the outer surface of said pre-assembled intermediate product comprising upper, toe and lining; once solidified, the polymer will constitute the sole of the safety footwear.

. While production techniques are based on the process described above or variants thereof comprising the pre-assembly step are satisfactory from many standpoints and particularly in their ability to secure the toe interposed between the lining and the upper, they are far from free of drawbacks.

. First of all, it is necessary to use the upper as the sealing element of the steel reinforcing toe and consequently it is necessary to carry out the step of folding back the edges of the upper creating undesirable bulk.

. In addition, the pre-assembly equipment and system, known as tack-lasting machine, are rather costly to purchase. In addition, the pre-assembly step can require rather long times and needs constant manual support on the part of an operator. As is well known, in the production of several types of shoes, the perfect adherence between the upper and the lining is of primary importance.

. These factors contribute to make the production price rise and to make inventory costs increase and therefore they lead to a high sale price of safety shoes, which as stated require frequent replacement.

. Thus, there is a need to provide a solution to the needs lamented with reference to the state of the art.

. There is a need to provide a method for manufacturing a shoe that makes it possible to reduce the number of steps and the manufacturing times, without thereby causing a diminished safety for a user with respect to known solutions.

. There is a strong need to propose a more economical safety footwear, suitable for frequent replacement without thereby leading to diminished safety for a user or being uncomfortable to wear.

. There is a strong need to provide a method for manufacturing safety shoes that is more economical compared to known solutions, while assuring an adequate level of finish of the safety footwear and satisfactory comfort.

### Solution

. An object of the present invention is to overcome the drawbacks of the prior art, mentioned hitherto.

. This and other objects are achieved with a method according to claim **1,** as well as with a shoe according to claim **10,** as well as with a plant according to claim **15.**

. Some advantageous embodiments are set forth in the dependent claims.

### Figures

. Further features and advantages of the method, of the safety footwear and of the plant according to the invention shall become readily apparent from the following description of preferred embodiments thereof, provided by way of non-limiting indication, with reference to the accompanying figures, in which:

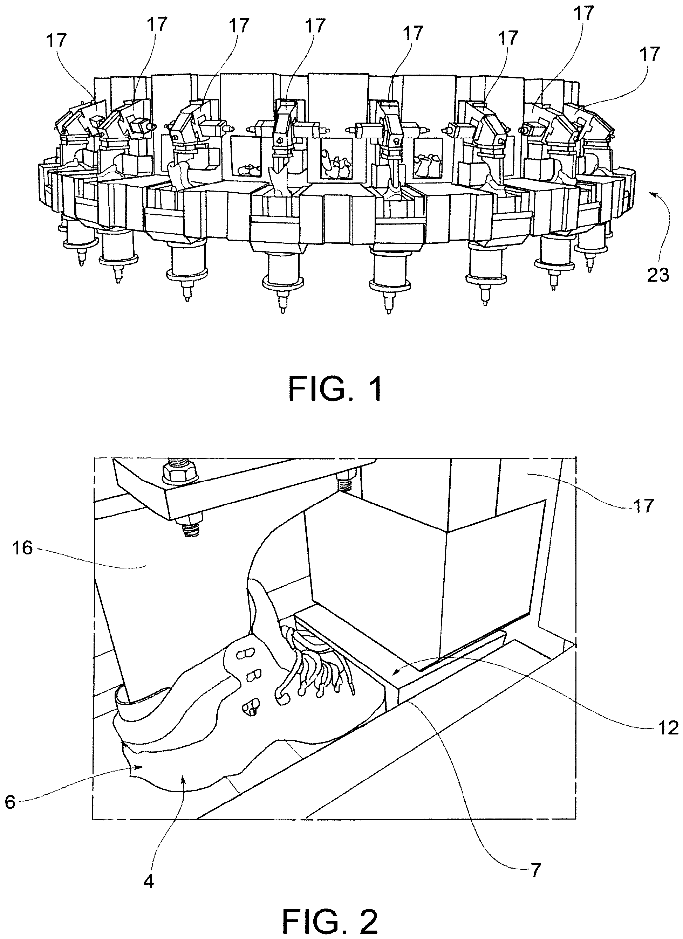

- figure 1 is a perspective view of a plant, in accordance with an embodiment;
- figure 2 is a perspective view of an assembly of upper, lining and toe housed in a mould, in accordance with a possible operating mode;

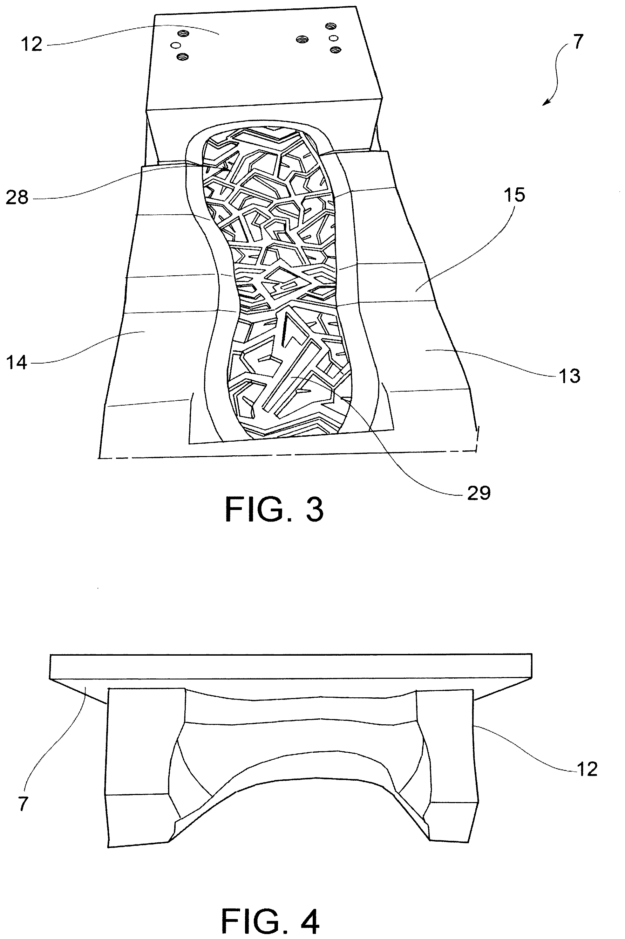

- figure 3 is a perspective view of a mould, in accordance with an embodiment;
- figure 4 is a perspective view of a portion of a mould, in accordance with an embodiment;

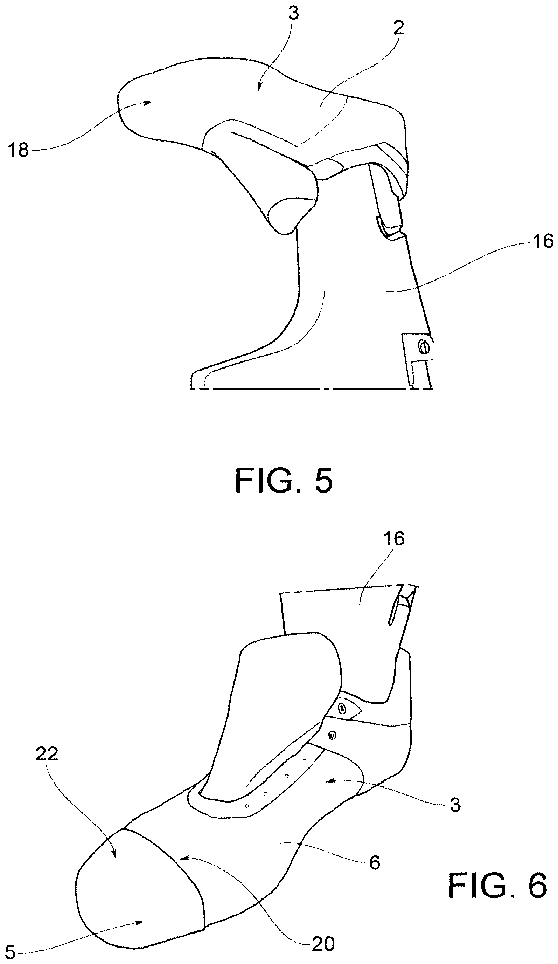

- figure 5 is a perspective view of an assembly of upper, lining and toe fitted on a form, in accordance with a possible operating mode;
- figure 6 is a perspective view of an assembly of upper, lining and toe fitted on a form, in accordance with a possible operating mode;

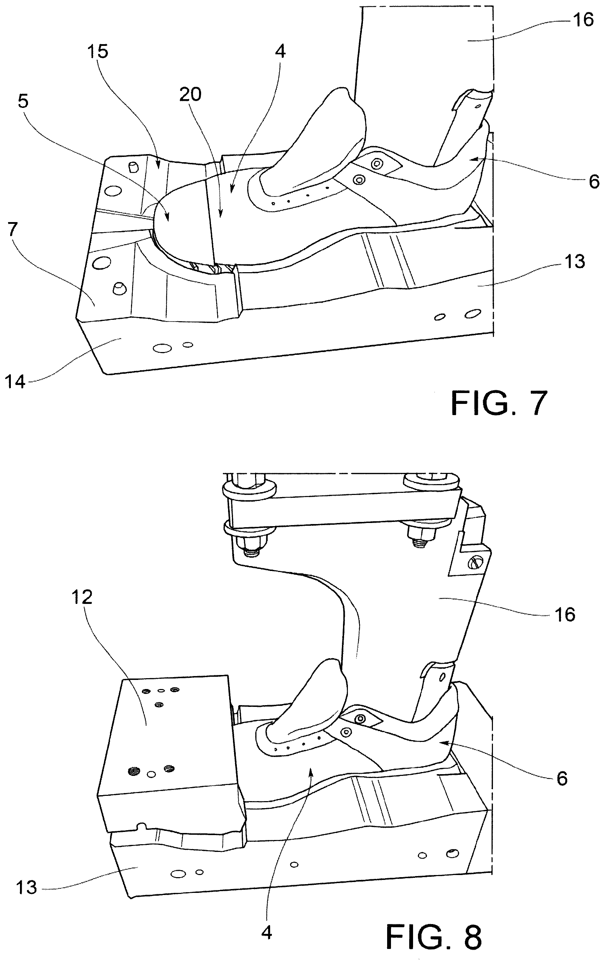

- figures 7 and 8 are perspective views of an assembly of upper, lining and toe fitted on a form and housed in a mould, in accordance with some possible operating modes;

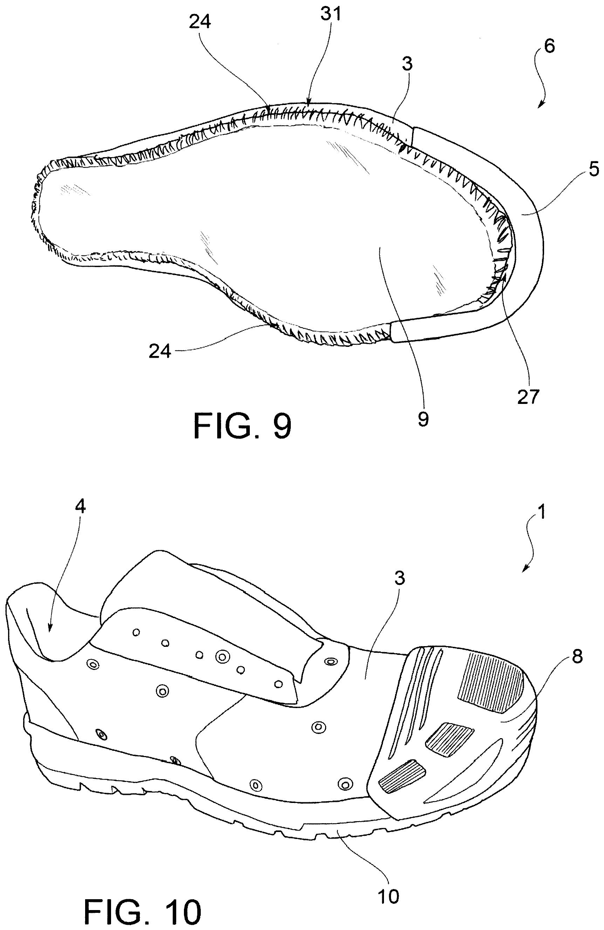

- figure 9 is a perspective view of the insole of an assembly of upper, lining and toe, in accordance with an embodiment;
- figure 10 a perspective view of a safety footwear, in accordance with an embodiment;

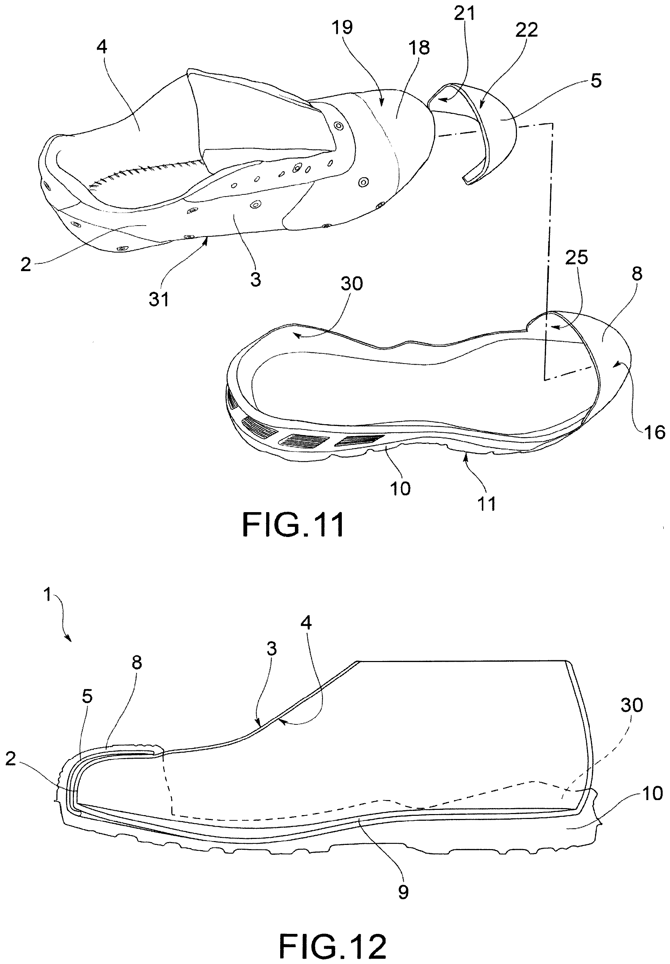

- figure 11 a perspective view with separate parts that shows a safety footwear, in accordance with an embodiment;
- figure 12 is a schematic section view that shows a safety footwear, in accordance with an embodiment;

### Description of some preferred embodiments

. In accordance with a general embodiment, a method for manufacturing a safety footwear 1 comprising the following steps A, B and C.

. Step A. Providing an assembly of upper and lining 2, comprising an upper 3 and a lining 4. Said upper 3 and said lining 4 are intimately coupled with each other. For example, said upper 3 and said lining 4 are sown and/or glued to each other. Preferably, said upper 3 is fitted on said lining 4. In accordance with an embodiment, said upper 3 and said lining 4 are irreversible coupled to each other. Preferably, said assembly of upper and lining 2 is a temporary or intermediate process pre-assembled product.

. Step B. Positioning a safety toe 5 on at least one portion of the upper 3 of said assembly of upper and lining 2, forming an assembly of upper, lining and toe 6. Preferably, said safety toe 5 bears on a portion of said upper 3. The provision of step B makes it possible to avoid interposing the safety toe between the lining 4 and the upper 3. Preferably, said assembly of upper, lining and toe 6 is a temporary or intermediate pre-assembled process product.

. Step C. House at least one portion of said assembly of upper, lining and toe 6 in a mould 7. Preferably, said mould 7 is made of material for moulds, preferably of metallic material. In accordance with an embodiment, said mould 7 delimits a mould volume with such shape and dimensions as to fully house at least said safety toe 5 and at least the portion of the assembly of upper and lining 2 whereon the safety toe 5 is positioned. Preferably, said step C comprises the sub-step of closing the mould 7.

. In accordance with a preferred operating mode, said method further comprises the following steps D and E.

. Step D. Injecting into said mould 7 thermosetting material in liquid or semi-liquid state until fully embedding at least said safety toe 5 of said assembly of upper, lining and toe 6.

. Step E. Solidifying said thermosetting material, so that it forms a retaining portion 8 that fully coats said toe 5 associating it with said upper 2.

. Thanks to the provisions of such a method, it is possible to avoid interposing the safety toe between the upper 3 and the lining 4.

. In accordance with a possible operating mode, said steps A through C, and preferably said steps A to E, are in succession in the order indicated previously.

. In accordance with an embodiment, said assembly of upper and lining 2 further comprises an insole 9, opposite to said upper 3 and intended to come in contact with the sole of a user's foot.

. In accordance with a preferred operating mode, said steps D' and E' are replaced by the following steps D' and E'.

. Step D'. Injecting into said mould 7 thermosetting material in liquid or semi-liquid state until fully embedding at least said toe 5 and fully embedding said insole 9 of said assembly of upper, lining and toe 6.

. Step E'. Solidify said thermosetting material, so that it forms a sole 10 that fully coats said insole 9. In this way, said sole 10 comprises in a single piece said retaining portion 8 that fully coats said toe 5 associating it to said upper 3. In other terms, said sole 10 comprises a tread 11, adapted to come in contact with a treadable surface when the safety footwear 1 is in use, and said retaining portion 8. Preferably, said tread 11 comprises a cleated portion, shaped in such a way as to promote adherence with a treadable surface.

. In accordance with a possible operating mode, said step E irreversibly associates said toe to said upper 3. In accordance with a possible operating mode, said step E' irreversibly associates said toe to said upper 3.

. In accordance with an embodiment, said step B comprises the sub-step of gluing said safety toe to the upper 3.

. In accordance with a possible operating mode, said mould 7 substantially forms a container that entirely encompasses said safety toe 5 and at least partially said insole 9 and said upper 3. Preferably, said mould 7 entirely encompasses said insole 9.

. In accordance with an embodiment, said mould 7 is a mould for injection moulding.

. In accordance with a possible operating mode, said mould 7 comprises at least a first portion 13, adapted to entirely encompass said insole 9 of the assembly of upper, lining and toe 6, and at least a second portion 12, adapted to entirely encompass said safety toe 5 of said assembly of upper, lining and toe 6. Preferably, said second portion 12 is a movable mould portion, associated with a device for actuating the movable mould portion, for example comprising a cylinder-piston assembly. In accordance with an embodiment, said first mould portion 13 is a fixed mould portion.

. In accordance with an embodiment, said first mould portion 13 comprises a movable mould portion, adapted to encompass at least one portion of the insole 9 of the assembly of upper, lining and toe 6, and a fixed mould portion, adapted to encompass a portion of the upper 3 of the assembly of upper, lining and toe 6.

. In accordance with a possible operating mode, said first mould portion 13 of the mould 7 comprises two opposite mould half-shells 14, 15, opposite with respect to said assembly of upper, lining and toe 6, so that said mould 7 comprises at least three mould bodies. In other terms, said mould 7 is formed by three separable mould bodies.

. In accordance with an embodiment, said mould 7 delimits one mould chambers 28, preferably open superiorly, adapted to house the thermosetting material.

. In accordance with an embodiment, said first mould portion 13 forms the bottom surface of said mould chamber 28, adapted to provide the shape to said tread 11 of the sole 10. In accordance with an embodiment, at least one between said movable mould portion 12 and said fixed mould portion 13 comprises at least one sole footprint 29, adapted to define the shape of said tread of the sole 10.

. Preferably, said mould 7 defining said mould chamber 28 forms a vessel that receives said thermosetting material, when in liquid or semiliquid form. In accordance with a possible operating mode, said mould 7 is oriented in favour of gravity, so that the thermosetting material in liquid or semiliquid form can fill the mould chamber 28 from said bottom wall formed by said first mould portion 13.

. In accordance with an embodiment, said first mould portion 13 comprises at least one movable mould portion, adapted to be thrust by a thrusting device for example comprising a cylinder-piston assembly, to form the lower portion of the sole 10, for example the tread 11.

. In accordance with an embodiment, said fixed mould portion 13 forms substantially a ring that encompasses said assembly of upper, lining and toe 6 to form the lateral edge of the sole 10, or sole edge 30.

. In accordance with a possible operating mode, said steps from B to E are carried out after fitting the assembly of upper and lining 2 on a single form 16, preferably said form 16 is made of metal. In this way, it is possible to avoid removing the assembly of upper, lining and toe 6 from the form on which it is fitted.

. In accordance with a possible operating mode, said thermosetting material is a polymeric material. For example, said thermosetting material comprises polyurethane. Ad esempio, detto materiale termoindurente e poliuretano.

. In accordance with a possible operating mode, said steps E and E' are carried out in the mould 7.

. In accordance with a possible operating mode, the steps from B to E are carried out on a single machine 17. Preferably, said single machine 17 is a direct injection machine. In accordance with an embodiment, said direct injection machine comprises a plurality of moulds 7.

. In accordance with a possible operating mode, said method manufactures a safety footwear 1.

. In accordance with a general embodiment, a plant 23 is provided that implements a method according to any of the embodiments described above.

. In accordance with an embodiment, said plant 23 comprises a single type of machine, particularly said direct injection machine 17. In other words, said plant 23 comprises solely direct injection machines 17.

. In accordance with an embodiment, said plant 23 comprises a plurality of said machines 17.

. In accordance with an embodiment, said plant 23 comprises a plurality of said machines 17.

. Thanks to the provision of said method, it is possible to accomplish the steps from A to E, or from A to E', with a single machine 17, consequently with a single plant 23. In this way, the manufacture of a safety footwear 1 is made faster compared to known solutions while avoiding the need to provide several machines, consequently reducing the bulk of the means used for production.

. Thanks to the provision of said method, said plant 23 comprising a plurality of said machines 17 makes it possible to produce a plurality of safety shoes simultaneously.

. In accordance with an embodiment, said plant 23 comprises a plurality of machines 17 aligned to form a substantially annular arrangement. In this way, the number of machines 17 simultaneously accessible by an operator is maximised.

. In accordance with a general embodiment, a safety footwear 1 comprises an upper 3 and at least one lining 4 intimately associated with each other. Preferably, said upper 3 and said lining 4 are intimately associated with each other forming an assembly of upper and lining 2.

. Said safety footwear 1 further comprises a safety toe 5, fitted on a portion of said upper 3 of said assembly of upper and lining 2.

. Said safety footwear 1 further comprises a retaining portion 8 that fully coats said toe 5 associating it with said upper 3.

. In accordance with an embodiment, said safety footwear 1 further comprises an insole 9, opposite to said upper 3 and intended to come in contact with the sole of a user's foot. In accordance with an embodiment, said assembly of upper and lining 2 further comprises said insole 9.

. In accordance with an embodiment, said insole 9 comprises a reinforcing layer adapted to form a protective barrier against the penetration of sharp objects, such as nails or the like. In accordance with an embodiment, said upper 3 is associated with said insole 9 by fastening means, for example by means of at least one seam 24.

. In accordance with a preferred embodiment, said safety footwear 1 comprises a sole 10 that fully coats said insole 9. Preferably, said sole 10 is made of a polymeric material.

. In accordance with a preferred embodiment, said sole 10 comprises said retaining portion 8 that entirely coats said safety toe 5 associating it to said upper 3.

. In accordance with a preferred embodiment, said sole 10 and said retaining portion 8 are made in a single piece. In this way, the number of parts to be assembled to obtain said safety footwear 1 is reduced whilst assuring a secure coupling of the upper 3 to the lining 4 and concurrently a secure fastening of the safety toe 5 to the upper 3.

. In accordance with a preferred embodiment, said retaining portion 8 is made of polymeric material. In accordance with a preferred embodiment, said sole 10 is made of polymeric material.

. Preferably, said polymeric material is a thermosetting material, and said retaining portion 8 and said sole 10 are obtained by injection of said thermosetting material into a mould 7.

. In accordance with an embodiment, said sole 10 comprises a sole edge 30, which encompasses at least partially said upper 3, preferably an inferior portion 31 of said upper 3, i.e. a portion of said upper 3 associated with said sole 9.

. In accordance with an embodiment, said assembly of upper and lining comprises a toe portion 18, shaped substantially as a pocket able to receive at least a portion of a user's foot. Preferably, said toe portion 18 faces an upper toe face 19 of said upper 3.

. In accordance with an embodiment, said upper 3 comprises said upper toe face 19.

. In accordance with an embodiment, said safety toe 5 is fitted on said upper toe portion 19 coating it and defining on said upper 3 a toe edge portion 20 that laps said safety toe 5. In accordance with an embodiment, said toe edge portion 20 has an elongated shape that encompasses the perimeter of said safety toe 5, when positioned on said upper 3. In accordance with an embodiment, between said safety toe 5 and said toe edge portion 20 there is a step.

. In accordance with a preferred embodiment, said retaining portion 8 fully coats said safety toe 5 and said toe edge portion 20 of said upper 3 and adheres to said toe edge portion 20 locking the safety toe 5 in a desired position. In this way, the adhesion of the retaining portion 8 to the toe edge portion 20 of the assembly of upper, lining and toe 6 maintains the safety toe 5 in the desired position, avoiding the need to interpose the safety toe 5 between the upper and the lining.

. In accordance with an embodiment, said toe edge portion 20 of said upper 3 is in contact with an opposite toe edge portion of the insole 27 of said insole 9. In other words, said insole 9 comprises and opposite toe edge portion of the insole 27, opposite to said toe edge portion 20 of the upper 3, and that laps said safety toe 5. Preferably, said sole 10 together with said retaining portion 8 envelop and adhere both to said toe edge portion 20 of said upper 3 and to said toe edge portion of the insole 27 of said insole 9.

. In accordance with an embodiment, said retaining portion 8 also adheres to said safety toe 5. Preferably, said safety toe 5 comprises an inferior face 21, intimately in contact with said upper 3, and a superior face 22, intimately in contact with said retaining portion 8. In accordance with an embodiment, said retaining portion 8 adheres to said superior face 22 of said safety toe 5.

. In accordance with an embodiment, said superior face 22 of said safety toe 5 comprises a coating, preferably a coating adapted to favour the adhesion with said retaining portion 8 preferably made of polymeric material. For example, said coating is a paint for metals.

. In accordance with an embodiment, said safety toe 5 is made of steel.

. In accordance with an embodiment, said retaining portion 8 comprises an inner face of the retaining portion 25, intimately in contact with said safety toe 5 and with said toe edge portion 20 of said upper 3, and an opposite outer face of the retaining portion 26.

. Thanks to the features described above separately or jointly with each other in particular embodiments, it is possible to obtain a method, as well as a safety footwear 1, as well as a plant 23, which at the same time satisfies the mutually contrasting needs described above, and the aforementioned desired advantages, and in particular:

. - the preassembly step is avoided, i.e. the step of obtaining a preassembled intermediate product comprising upper, lining, insole and safety toe, in which the safety toe that is interposed between the lining and the upper is maintained in position thanks to the joint provision of gluing to the lining and stitching upper edges to the insole, thereby reducing manufacturing times and hence costs;
- concurrently, the provision of a production plant comprising a tack-lasting machine intended to carry out the preassembly step is avoided, with a consequent reduction of the manufacturing costs and of the dimensions of the plant;
- a rapid series production of safety shoes, even having different upper and/or lining features, using a single machine, is allowed;
- the intimate adhesion of the safety toe to the upper is facilitated, avoiding locking it between the upper and the lining;
- the entire process is allowed to take place fitting the assembly of upper and lining on a single form 16, preferably made of aluminium;
- by adjusting the dimensional characteristics of the mould 7, it is possible to obtain variously shaped soles 10 as well as retaining portions 8 that are variously shaped, especially externally.

. To the embodiments described above, a person with skill in the art, to meet contingent and specific needs, may make numerous modifications, adaptations and replacements of elements with other, functionally equivalent ones, without however departing from the scope of the following claims.

### LIST OF REFERENCES

- 1: Safety footwear
- 2: Assembly of upper and lining
- 3: Upper
- 4: Lining
- 5: Safety toe
- 6: Assembly of upper, lining and toe
- 7: Mould
- 8: Retaining portion
- 9: Insole
- 10: Sole
- 11: Tread
- 12: Second mould portion
- 13: First mould portion
- 14: First half-shell of the first mould portion
- 15: Second half-shell of the second mould portion
- 16: Form
- 17: Direct injection machinery or machine
- 18: Tip portion of the assembly of upper and lining
- 19: Tip portion of the upper
- 20: Tip edge portion of the upper
- 21: Inferior face of the toe
- 22: Superior face of the toe
- 23: Plant
- 24: Seam
- 25: Inner face of retaining portion
- 26: Outer face of retaining portion
- 27: Tip edge portion of the insole
- 28: Moulding chamber
- 29: Sole footprint of the mould
- 30: Sole edge
- 31: Inferior portion of the upper

## Claims

1. Method for manufacturing a safety footwear (1) comprising the following steps:
- A- providing an assembly of upper and lining (2), comprising an upper (3) and a lining (4), said upper (3) and said lining (4) being intimately coupled with each other;
- B- positioning a safety toe (5) on at least a portion of the upper (3) of said assembly of upper and lining (2), forming an assembly of upper, lining and toe (6);
- C- housing at least a portion of said assembly of upper, lining and toe (6) in a mould (7);
- D- injecting into said mould (7) thermosetting material in liquid or semi-liquid state until fully embedding at least said safety toe (5) of said assembly of upper, lining and toe (6);
- E- solidifying said thermosetting material, so that it forms a retaining portion (8) that fully coats said toe (5) associating it with said upper (2).

2. Method according to claim **1,** wherein said steps are in succession in the order indicated.

3. Method according to claim **1** or **2,** wherein said assembly of upper and lining (2) further comprises an insole (9), opposite to said upper (3) and intended to come in contact with the sole of a user's foot, and wherein said steps -D- and - E- are replaced by the following steps:
- D'- injecting into said mould (7) thermosetting material in liquid or semi-liquid state until fully embedding at least said toe (5) and fully embedding said insole (9) of said assembly of upper, lining and toe (6);
- E'- solidifying said thermosetting material, so that if forms a sole (10) that fully coats said insole (9), said sole (10) comprising, preferably in a single piece, said retaining portion (8) which fully coats said toe (5) associating it with said upper (3).

4. Method according to any of the preceding claims, wherein said step -E-irreversibly associates said toe with said upper (3).

5. Method according to any of the preceding claims, wherein said mould (7) comprises at least a first mould portion (13), adapted fully to envelop said insole (9) of the assembly of upper, lining and toe (6), and at least a second mould portion (12), adapted to envelop, preferably fully, said safety toe (5) of said assembly of upper, lining and toe (6).

6. Method according to claim **5,** wherein said first mould portion (13) comprises two opposite mould half-shells (14, 15), opposite with respect to said assembly of upper, lining and toe (6), so that said mould (7) comprises at least three bodies (13, 14, 15).

7. Method according to any of the preceding claims, wherein said steps from - B- to -E- are carried out after fitting the assembly of upper and lining (2) on a single form (16).

8. Method according to any of the preceding claims, wherein said thermosetting material is polymeric material, for example comprising polyurethane.

9. Method according to any of the preceding claims, wherein the steps from -B-to -E- are carried out with a single machine (17).

10. Safety footwear (1) comprising:
- an upper (3) and a lining (4) intimately associated with each other;
- a safety toe (5), fitted on a portion of said upper (3), avoiding interposing said safety toe (5) between said upper (2) and said lining (4);
- a retaining portion (8) that fully coats said toe (5) associating it with said upper (3).

11. Safety footwear (1) according to claim **10,** wherein:
- said safety footwear (1) further comprises an insole (9), opposite to said upper (3) and intended to come in contact with the sole of a user's foot;
- said safety footwear (1) comprises one sole (10) that fully coats said insole (9);
- said sole (10) comprising said retaining portion (8) that fully coats said safety toe (5) associating it with said upper (3).

12. Safety footwear (1) according to claim **10** or **11,** wherein said sole (10) and said retaining portion (8) are made in a single piece.

13. Safety footwear (1) according to any of the claims from **10** to **12,** wherein said upper (3) comprises an upper toe portion (19), said safety toe (5) being fitted on said upper toe portion (19) coating it and defining on said upper (3) a toe edge portion (20) which laps said safety toe (5); said retaining portion (8) fully coats said safety toe (5) said toe edge portion (20) of said upper (3) and adheres to said toe edge portion (20) locking the safety toe (5) in a desired position.

14. Safety footwear (1) according to any of the claims from **10** to **13,** wherein said retaining portion (8) is made of polymeric material; and/or wherein
said sole (10) is made of polymeric material.

15. Plant that implements a method according to any of the claims from **1** to **9.**
